# EUROPEAN PATENT SPECIFICATION

(11) **EP 3 298 906 B1**
(45) Date of publication and mention of the grant of the patent: **14.08.2024**
(21) Application number: 16799558.8
(22) Date of filing: 20.05.2016
(51) Int. Cl.: A23G 1/46, A23L 2/60, A21D 2/14, A21D 2/26, A23L 27/20, A23G 1/40, A23C 11/04

(54) **METHOD FOR MANUFACTURING A POWDER HAVING FLAVOR ENHANCING EFFECT**
VERFAHREN ZUR HERSTELLUNG EINES PULVERS MIT GESCHMACKSVERSTÄRKENDER WIRKUNG
PROCÉDÉ DE FABRICATION D'UNE POUDRE PRÉSENTANT UN EFFET DE REHAUSSEMENT DU GOÛT

(30) Priority: 22.05.2015 JP 2015104602
(43) Date of publication of application: 28.03.2018
(73) Proprietor: Lotte Co., Ltd., Tokyo 160-0023 (JP)
(72) Inventor: IGARASHI, Takuma, Saitama-shi Saitama 336-0027 (JP); TAMURA, Ikuo, Saitama-shi Saitama 336-0027 (JP); KOYAMA, Toshiyuki, Saitama-shi Saitama 336-0027 (JP); ASHITANI, Hiroaki, Saitama-shi Saitama 336-0027 (JP); SAITO, Keisuke, Saitama-shi Saitama 336-0027 (JP); USAMI KRANK, Yoko, Saitama-shi Saitama 336-0027 (JP)
(74) Representative: Wächtershäuser & Hartz Patentanwaltspartnerschaft mbB
(86) International application number: PCT/JP2016/002469
(87) International publication number: WO 2016/189845

(56) References cited:
- EP-A1- 0 933 029
- EP-A1- 2 166 868
- EP-B1- 2 166 868
- WO-A1-2006/017344
- WO-A1-99/39585
- WO-A2-2014/173966
- CN-A- 1 161 784
- ES-T3- 2 363 157
- JP-A- 2009 219 416
- JP-A- H09 252 723
- JP-A- H09 252 723
- JP-A- H10 262 549
- JP-A- S5 035 352
- JP-A- S5 843 755
- US-A1- 2008 299 278
- BERG, H. E. ET AL.: "Degradation of lactose during heating of milk. 1.", REACTION PATHWAYS, NETH. MILK DAIRY J., vol. 48, no. 3, 1994, pages 157 - 175, XP009507612
- TADASU URASHIMA ET AL.: "Identification of Some Volatile Compounds Formed from Lactose Monohydrate during Pyrolysis", JOURNAL OF THE AGRICULTURAL CHEMICAL SOCIETY OF JAPAN, vol. 57, no. 7, 1983, pages 641 - 647, XP009507609
- HOHNO, H. ET AL.: "Formation of Anhydro-Sugars During Thermal Degradation of Lactose", J. DAIRY SCI., vol. 66, no. 1, 1983, pages 11 - 16, XP009507586

## Description

### Technical Field

The present invention relates to a manufacturing method for a powder including a fat and the milk protein as main components, and hardly containing monosaccharides and disaccharides. The powder may be used as an alternative to whole milk, processed milk, whole milk powder, powdered skim milk, or the like, and may be used for a food and drink exhibiting a milk flavor.

### Background Art

Hitherto, foods and drinks containing components derived from raw milk have often used, from the viewpoints of storability of a raw material, its transportability, and its suitability in manufacture, whole milk powder obtained by drying raw milk as it is, powdered skim milk obtained by removing milkfat from raw milk and drying the resultant, and the like, instead of using raw milk as it is.

In addition, in recent years, from the viewpoints of obesity prevention and health promotion, there has been a demand for a sugarless food and drink having a content of monosaccharides and disaccharides of less than 0.5%. However, the whole milk powder, the powdered skim milk, and the like contain large amounts of lactose. Specifically, the whole milk powder contains lactose at a weight ratio of about 40%, and the powdered skim milk contains lactose at a weight ratio of about 50%. Accordingly, it is essentially difficult to use the whole milk powder, the powdered skim milk, or the like as it is for a sugarless food and drink.

Therefore, butter, a milk protein, and the like are sometimes used as alternatives to the whole milk powder and the powdered skim milk. However, when the butter, the milk protein, or the like is used as it is for a food and drink, it is difficult to create a flavor and texture comparable to those of a food and drink using the whole milk powder or the powdered skim milk.

Meanwhile, a delactosed powder, which is obtained through component adjustment for decreasing a content of a saccharide component, such as lactose, to the extent possible, has also been used for a sugarless food and drink. For example, in Patent Literature 1, there are disclosed a delactosed powder obtained by homogenizing milkfat having a lactose content of less than 2% with a milk protein in an aqueous solution to form an oil-in-water emulsified structure, and spray-drying or freeze-drying the mixed liquid containing the emulsified structure, and a manufacturing method therefor.

However, it cannot be denied that a food and drink using the delactosed powder described in Patent Literature 1 is inferior in milk feeling and rich taste to a food and drink using the whole milk powder or the powdered skim milk. Further, even the delactosed powder described in Patent Literature 1 inevitably contains lactose derived from the milkfat and the milk protein, and there has been a need to achieve a further reduction in lactose content. Z Further, EP 0 933 029 describes an amorphous sugar free sweetening composition as a sugar substitute in the production of chocolate confectionery.

### Citation List

### Patent Literature

PTL 1: Japanese Patent Application Laid-Open No. 9-252723

### Summary of Invention

### Technical Problem

Therefore, an object of the present invention is to provide a manufacturing method for a powder containing as little amounts of monosaccharides and disaccharides as possible, to provide a food and drink using the powder, which is rich in milk feeling and rich taste as compared to a related-art food and drink, while being sugarless.

### Solution to Problem

The present invention relates to the subject matter of claims 1 to 5. In order to achieve the above-mentioned objects, the inventors of the present invention have made extensive investigations, and as a result, have found that, when a raw material mixture containing a fat, a milk protein, and a filler is subjected to heat treatment, a powder having enhancing effects on milk feeling and a rich taste is obtained. In addition, as a result of detailed analysis of the obtained powder, the inventors have unexpectedly found that the total amount of monosaccharides and disaccharides in the powder after heating is reduced as compared to the total amount of the monosaccharides and the disaccharides in the raw material mixture before heating.

In addition, a food and drink, in particular, a chocolate, a biscuit, or the like, manufactured using the powder has milk feeling and a rich taste higher than those of a food and drink using whole milk powder, and is generally felt to be tasty.

### Description of Embodiments

### <Materials>

Now, a fat, a milk protein, and a filler serving as raw materials for a powder used in the method of the present invention are exemplified.

As the fat, not only butter separated from raw milk, but also butter oil obtained by removing moisture from the butter may be used. In addition, the raw milk is not limited to raw milk derived from a cow, and raw milk derived from a buffalo, a sheep, or a goat may be used.

In addition, the fat is not limited to an animal fat, and a vegetable fat may be used. Examples of the vegetable fat that may be used include, but not limited to, coconut oil, cocoa butter, shea butter, corn oil, cottonseed oil, olive oil, palm oil, palm kernel oil, peanut oil, rapeseed oil, safflower oil, sesame oil, soybean oil, sunflower oil, and rice oil. Of those, a vegetable oil that is a solid at normal temperature is preferred, and coconut oil, cacao butter, or shea butter is particularly preferred.

The fats may be used alone or as a mixture thereof.

Examples of the milk protein that may be used include, but not limited to, whole milk protein, milk protein isolate, whey protein, milk protein concentrate, whey protein concentrate, whey protein isolate, casein, and casein salts.

The milk proteins may be used alone or as a mixture thereof.

A ratio between the fat and the milk protein in a raw material mixture is from 1:3 to 3:1, preferably from 1:2 to 2:1, more preferably from 1:1.1 to 1.1:1, still more preferably from 1:1.05 to 1.05:1 in terms of weight ratio.

The filler that is used comprises polydextrose or dextrin because heavy use of a sugar alcohol causes problems, such as a laxative property and an endothermic property.

The fillers may be used alone or as a mixture thereof.

The ratio of the filler in the raw material mixture is from 1:0 to 1:2.5, preferably from 1:1 to 1:1.5, more preferably from 1:1.25 to 1:1.35 in terms of weight ratio with respect to a mixture of the fat and the milk protein.

An example of other components contained in the raw material mixture for the powder is a pH adjuster. Examples of the pH adjuster may include, but not limited to, adipic acid, citric acid, trisodium citrate, gluconic acid, succinic acid, lactic acid, potassium carbonate, sodium hydrogen carbonate, sodium hydrogen phosphate, sodium pyrophosphate, sodium metaphosphate, and sodium polyphosphate. The pH adjuster is preferably contained at a ratio of 1% or less in terms of weight ratio with respect to the total weight of the raw material mixture. In addition, a mineral, an amino acid, a nucleic acid, or the like may also be added as a material for flavor or nutrient enhancement.

Further, into the raw material mixture for the powder, monosaccharides or disaccharides, such as: lactose derived from components derived from raw milk, i.e., milkfat, such as butter and butter oil, and the milk protein; and glucose, fructose, sucrose, maltose, and lactose derived from the filler are unintentionally incorporated though in small amounts. It is desirable that the raw material mixture contain none of those monosaccharides and disaccharides. In actuality, however, the monosaccharides and the disaccharides are unintentionally incorporated as impurities at a ratio of about 2% or less in terms of weight ratio with respect to the total weight of the raw material mixture. In one mode of the present invention, the total amount of the monosaccharides and the disaccharides contained in the powder is the content of lactose.

### <Manufacturing Method>

Now, a manufacturing method of the present invention for the powder is exemplified.

To the fat, the milk protein, and the filler serving as the raw materials for the powder, small amounts of water and a pH adjuster are added to provide the raw material mixture, and the raw material mixture is uniformly dissolved by being heated to about 50°C. The uniformly dissolved raw material mixture is subjected to heat treatment at a temperature of 90°C to 120°C, preferably a temperature of from 115°C to 120°C. The heat treatment time is from 30 minutes to 120 minutes. After the heat treatment, as necessary, a solid is removed by filtration, and the raw material mixture is uniformly emulsified using a homogenizer to provide a raw material mixed liquid.

The emulsified raw material mixed liquid is filtered again, and spray-dried to provide a powdery solid. The resultant solid is cooled, and its size is regulated with a sieve. Thus, the powder, obtainable by the method of the present invention, is obtained.

### <Food and Drink>

A food and drink using the powder, obtainable by the method of the present invention, as part of its raw materials may be exemplified by, but not limited to, chocolates, baked confectionery such as biscuits, candies and the like, ice creams and sherbets, and drinks, such as coffee and tea. The food and drink may contain sugar, or may be sugarless, and may be a composite food obtained by appropriately combining the foods and drinks listed above.

When the powder, obtainable by the method of the present invention, is used as a raw material for the food and drink, the food and drink may be manufactured by a general method through the use of the powder as it is or as a solution in water, as an alternative to raw milk or powdered milk.

In addition, when the food and drink using the powder, obtainable by the method of the present invention, as part of its raw materials is a sugarless food and drink, a sugar alcohol and/or a high-intensity sweetener may be used in place of monosaccharides and disaccharides. Examples of the sugar alcohol may include maltitol, xylitol, lactitol, sorbitol, reduced palatinose, and mannitol. In addition, examples of the high-intensity sweetener may include aspartame, acesulfame potassium, sucralose, neotame, and stevia. In the sugarless food and drink, the sugar alcohols and the high-intensity sweeteners may be used alone or in combination thereof.

Now, the present invention is described by way of specific Examples. However, the present invention is not limited to these Examples.

### [Example 1]

### [Preparation of Raw Material Mixture 1]

In accordance with blending amounts shown in Table 1, raw materials were loaded into a stirring machine, and dissolved and mixed at 50°C for an arbitrary period of time to prepare a raw material mixture 1.

**Table 1**

| Component | Part(s) by weight |
|---|---|
| Butter | 26 |
| Milk protein isolate | 28 |
| Polydextrose | 42 |
| pH adjuster | 1 |
| Water | a proper quantity |

### [Manufacture of Powder]

The raw material mixture 1 was mixed under heating at 90°C for 30 minutes, and the resultant solid was filtered at from 30 mesh to 100 mesh (about 0.15 mm to about 0.5 mm). The raw material mixture after the filtration was uniformly emulsified with a homogenizer, and filtered again at from 30 mesh to 100 mesh. The resultant was subjected to spray-drying, and the resultant powder was subjected to cooling treatment. After that, particle sizes were uniformized using a sieve of from 10 mesh to 24 mesh (about 0.7 mm to about 1.7 mm) to provide a powder of Example 1. The content of water in the manufactured powder of Example 1 was about 3 parts by weight with respect to the components shown in Table 1.

### [Example 2 to Example 4]

Powders of Examples 2 to 4 were obtained using the raw material mixture 1 in the same manner as in Example 1 except that the heating temperature and the heating time were set as shown in Table 2.

### [Comparative Example 1]

The raw material mixture 1 of Example 1 keeping a liquid form and not subjected to the heat treatment or the spray-drying was used as Comparative Example 1.

### [Comparative Example 2]

A powder of Comparative Example 2 was obtained in the same manner as in Example 1 except that the raw material mixture 1 was not subjected to the heat treatment.

### [Comparative Examples 3 and 4]

Powders of Comparative Examples 3 and 4 were obtained in the same manner as in Example 1 except that the heating temperature and the heating time were set as shown in Table 2.

### [Measurement of Lactose, and Total Amount of Monosaccharides and Disaccharides in Powder]

The ratios of lactose, and the total amount of monosaccharides and disaccharides in the powder of each of Examples and Comparative Examples were measured by the following method. The results are shown in Table 2.
Measurement apparatus: Ion Chromatography ICS-3000 (Nippon Dionex K.K.)
Column: CarboPac PA1 (4×250 mm)
Guard column: CarboPac PA1 (4×50 mm)
Eluent: 150 mM sodium hydroxide solution
Detector: PAD, flow rate: 1.0 ml/min
Sample injection amount: 25 µl

A sample solution used was obtained by: adding water to each sample; heating and extracting the mixture; then removing fat and protein with chloroform; and appropriately diluting the resultant with water.

It was revealed from the results that, as compared to the ratio of lactose in Comparative Example 1, i.e., 0.59 wt%, the ratio of lactose in the powder, obtainable by the method of the present invention, shown in each of Examples 1 to 4 was reduced by as much as from about 20 percent to about 30 percent or more. Meanwhile, with regard to the ratio of the total amount of the monosaccharides and the disaccharides in the powder, the powders manufactured through the heat treatment at 118°C each had the total amount of the monosaccharides and the disaccharides reduced by from about 10 percent to about 30 percent, but the powder manufactured through the heating at 90°C did not significantly differ from Comparative Example 1. A possible reason for this is as follows: the detection amount of the residual monosaccharides and disaccharides except for lactose is extremely close to the detection limit (0.05 wt%), and this fact is extremely liable to affect the value of the total saccharide content.

**Table 2**

| Component | Raw material | Heating temperature | Heating time | Lactose content | Total saccharide content |
|---|---|---|---|---|---|
| Example 1 | Raw material mixture 1 | 90°C | 30 minutes | 0.48 wt% | 0.60 wt% |
| Example 2 (Reference) | Raw material mixture 1 | 118°C | 10 minutes | 0.47 wt% | 0.47 wt% |
| Example 3 | Raw material mixture 1 | 118°C | 30 minutes | 0.41 wt% | 0.41 wt% |
| Example 4 | Raw material mixture 1 | 118°C | 50 minutes | 0.39 wt% | 0.52 wt% |
| Comparative Example 1 | Raw material mixture 1 | - | - | 0.59 wt% | 0.59 wt% |
| Comparative Example 2 | Raw material mixture 1 | - | - | 0.56 wt% | 0.56 wt% |
| Comparative Example 3 | Raw material mixture 1 | 50°C | 120 minutes | 0.58 wt% | 0.58 wt% |
| Comparative Example 4 | Raw material mixture 1 | 60°C | 120 minutes | 0.56 wt% | 0.62 wt% |

### [Examples 5 and 6]

### [Preparation of Raw Material Mixture 2]

A raw material mixture 2 was obtained in the same manner as with the raw material mixture 1 except that the polydextrose was changed to dextrin.

### [Manufacture of Powder]

Powders of Examples 5 and 6 were obtained using the raw material mixture 2 in the same manner as in Example 1 except that the heating temperature and the heating time were set as shown in Table 3.

### [Comparative Example 5]

The raw material mixture 2 keeping a liquid form and not subjected to the heat treatment or the spray-drying was used as Comparative Example 5.

### [Comparative Example 6]

A powder of Comparative Example 6 was obtained in the same manner as in Examples 5 and 6 except that the raw material mixture 2 was not subjected to the heat treatment.

### [Measurement of Lactose, and Total Amount of Monosaccharides and Disaccharides in Powder]

The ratios of lactose, and the total amount of monosaccharides and disaccharides in the powder of each of Examples and Comparative Examples were measured by the same method as in Examples 1 to 4 and the like. The results are shown in Table 3.

It was revealed from the results that, as compared to the ratio of lactose in the powder of Comparative Example 5, i.e., 0.67 wt%, the ratio of lactose in the powder, obtainable by the method of the present invention, shown in each of Examples 5 and 6 was reduced by as much as from about 20 percent to about 30 percent. Meanwhile, with regard to the total amount of the monosaccharides and the disaccharides, unlike the case of using polydextrose as a filler, the total amount of the monosaccharides and the disaccharides was reduced, though slightly, in Example 5, in which the heat treatment was performed at 90°C.

**Table 3**

| Component | Raw material | Heating temperature | Heating time | Lactose content | Total saccharide content |
|---|---|---|---|---|---|
| Example 5 | Raw material mixture 2 | 90°C | 30 minutes | 0.52 wt% | 1.13 wt% |
| Example 6 | Raw material mixture 2 | 118°C | 50 minutes | 0.45 wt% | 0.93 wt% |
| Comparative Example 5 | Raw material mixture 2 | - | - | 0.67 wt% | 1.17 wt% |
| Comparative Example 6 | Raw material mixture 2 | - | - | 0.63 wt% | 1.19 wt% |

### [Examples 7 and 8]

### [Preparation of Raw Material Mixture 3]

A raw material mixture 3 was obtained in the same manner as with the raw material mixture 1 except that the polydextrose was changed to a mixture of polydextrose and dextrin at a weight ratio of 1:1.

Powders of Examples 7 and 8 were obtained using the raw material mixture 3 in the same manner as in Example 1 except that the heating temperature and the heating time were set as shown in Table 4.

### [Measurement of Lactose, and Total Amount of Monosaccharides and Disaccharides in Powder]

The ratios of lactose, and the total amount of monosaccharides and disaccharides in the powder of each of Examples 7 and 8 were measured by the same method as in Examples 1 to 4 and the like. The results are shown in Table 4.

It was revealed from the results that the ratios of lactose, and the total amount of the monosaccharides and the disaccharides in the powder of Example 8 subjected to the heat treatment for a longer period of time were more reduced.

**Table 4**

| Component | Raw material | Heating temperature | Heating time | Lactose content | Total saccharide content |
|---|---|---|---|---|---|
| Example 7 | Raw material mixture 3 | 95°C | 45 minutes | 0.54 wt% | 1.03 wt% |
| Example 8 | Raw material mixture 3 | 95°C | 120 minutes | 0.45 wt% | 0.79 wt% |

### [Quality Evaluation]

The results of the powder of Example 4 and the powder of Comparative Example 2 eaten as they were by an expert panel of eight members are shown in Table 5. In Table 5, for each of the items "milk taste thickness", "milk feeling", "tastiness", and "scent", the number of members who felt that each powder was preferred is shown. It is found from the results that, in the powder, obtainable by the method of the present invention, the "milk taste thickness" and the "milk feeling" are enhanced by performing the heat treatment in the manufacturing process. However, there was also an opinion that the powders of Example 4 and Comparative Example 2 themselves did not exhibit a distinct flavor, and hence the difference was difficult to discern. Meanwhile, it was conceivable that the powder, obtainable by the method of the present invention, generated an unpleasant odor, such as a burnt smell, due to the heat treatment, but it was found from the results of comparative testing that such unpleasant odor was not generated.

**Table 5**

| Component | Example 4 | No difference | Comparative Example 2 |
|---|---|---|---|
| Milk taste thickness | 5 people | 0 people | 3 people |
| Milk feeling | 5 people | 1 person | 2 people |
| Tastiness | 5 people | 1 person | 2 people |
| Scent | 0 people | 8 people | 0 people |

### [Manufacture of Sugarless Chocolate]

Sugarless chocolates were manufactured using raw materials blended as shown in Table 6. For the powder in Table 6, a sugarless chocolate obtained by using the powder of Comparative Example 2 is referred to as chocolate 1, a sugarless chocolate obtained by using the powder of Example 4 is referred to as chocolate 2, and a sugarless chocolate obtained by using the powder of Example 1 is referred to as chocolate 3. In addition, the total amounts of monosaccharides and disaccharides in the powder of Comparative Example 2, the powder of Example 4, and the powder of Example 1 are 0.56 wt%, 0.52 wt%, and 0.60 wt%, respectively.

**Table 6**

| Component | Weight ratio |
|---|---|
| Cacao mass | 30 |
| Powder | 20 |
| Cocoa butter | 10 |
| Vegetable oil and fat | 10 |
| Sugar alcohol | 30 |
| High-intensity sweetener | 0.1 |
| Emulsifier | 0.4 |
| Flavor | 0.2 |
| Total | 100 |

In Table 6 above, as the sugar alcohol, one or more kinds appropriately selected from maltitol, xylitol, lactitol, sorbitol, erythritol, reduced palatinose, and mannitol were used. In addition, as the high-intensity sweetener, one or more kinds appropriately selected from aspartame, acesulfame potassium, sucralose, neotame, and stevia were used. However, the sugar alcohols and high-intensity sweeteners to be used for each evaluation sample were of the same kinds and blending ratios in all cases.

The chocolates 1, 2, and 3 were each manufactured by the following method. The cacao mass, powder, cocoa butter, vegetable oil and fat, sugar alcohol, and high-intensity sweetener shown in Table 6 were mixed and finely pulverized, and conched, and then an emulsifier and a flavor were added to manufacture chocolate dough. The chocolate dough was tempered and loaded into a mold at from 28°C to 29°C, cooled at from 10°C to 15°C, and then demolded. Thus, the chocolates 1, 2, and 3 were obtained.

### [Palatability Evaluation]

The results of palatability evaluation of the chocolates 1 and 2 performed by an expert panel on chocolate consisting of ten members are shown in Table 7. In Table 7, for each of the items "milk taste thickness", "milk feeling", "sweetness", "chocolate taste", and "tastiness", the number of members who felt that each chocolate was preferred is shown. It was found from the results that the powder, obtainable by the method of the present invention, enhanced the "milk taste thickness", the "milk feeling", the "sweetness", and the "chocolate taste" of a sugarless chocolate by virtue of the heat treatment in the manufacturing process, and as a result, made the sugarless chocolate tasty.

**Table 7**

| Component | Chocolate 1 | No difference | Chocolate 2 |
|---|---|---|---|
| Milk taste thickness | 1 person | 0 people | 9 people |
| Milk feeling | 0 people | 1 person | 9 people |
| Sweetness | 1 person | 3 people | 6 people |
| Chocolate taste | 0 people | 1 person | 9 people |
| Tastiness | 0 people | 1 person | 9 people |

The results of palatability evaluation of the chocolates 2 and 3 performed by an expert panel on chocolate consisting of fifteen members are shown in Table 8. In Table 8, for each of the items "milk taste thickness", "milk feeling", and "tastiness", the number of members who felt that each chocolate was preferred is shown. It was found from the results that the powder, obtainable by the method of the present invention, enhanced the "milk taste thickness" and the "milk feeling" of a sugarless chocolate by virtue of the heat treatment at high temperature for a long period of time in the manufacturing process, and as a result, made the sugarless chocolate tasty.

**Table 8**

| Component | Chocolate 2 | No difference | Chocolate 3 |
|---|---|---|---|
| Milk taste thickness | 12 people | 1 person | 2 people |
| Milk feeling | 9 people | 2 people | 4 people |
| Tastiness | 9 people | 1 person | 5 people |

### [Manufacture of Sugarless Biscuit]

Sugarless biscuits were manufactured using raw materials blended as shown in Table 9. For the powder in Table 9, a sugarless biscuit obtained by using the powder of Example 4 is referred to as biscuit 1, a sugarless biscuit obtained by using the powder of Comparative Example 2 is referred to as comparative biscuit 1, and a sugarless biscuit obtained by using the whole milk powder is referred to as comparative biscuit 2. The total amounts of monosaccharides and disaccharides in the powder of Example 4 and the powder of Comparative Example 2 are 0.52 wt% and 0.56 wt%, respectively.

**Table 9**

| Component | Weight ratio |
|---|---|
| Wheat flour | 100 |
| Vegetable oil and fat | 30 |
| Sugar alcohol | 25 |
| High-intensity sweetener | 0.1 |
| Processed starch | 9 |
| Polydextrose | 9 |
| Powder | 6 |
| Whole egg | 5 |
| Leavening agent | 2 |
| Cocoa powder | 7 |
| Flavor | 2 |
| Water | 9 |

In Table 9 above, as the sugar alcohol, one or more kinds appropriately selected from maltitol, xylitol, lactitol, sorbitol, erythritol, reduced palatinose, and mannitol were used. In addition, as the high-intensity sweetener, one or more kinds appropriately selected from aspartame, acesulfame potassium, sucralose, neotame, and stevia were used. However, the sugar alcohols and high-intensity sweeteners to be used for each evaluation sample were of the same kinds and blending ratios in all cases.

The biscuit 1, and the comparative biscuits 1 and 2 were each manufactured in accordance with a conventional method.

### [Palatability Evaluation]

The results of palatability evaluation of the biscuit 1 and the comparative biscuit 1 and the results of palatability evaluation of the biscuit 1 and the comparative biscuit 2 performed by an expert panel on baked confectionery consisting of ten members are shown in Tables 10 and 11, respectively. In Tables 10 and 11, for each of the items "thickness", "richness", "milk feeling", and "tastiness", the number of members who felt that each biscuit was preferred is shown. It was found from the results of Table 10 that the powder, obtainable by the method of the present invention, enhanced the "thickness", "richness", and "milk feeling" of a sugarless biscuit by virtue of the heat treatment in the manufacturing process, and as a result, enhanced the "tastiness" of the sugarless biscuit.

**Table 10**

| Component | Biscuit 1 | No difference | Comparative biscuit 1 |
|---|---|---|---|
| Thickness | 4 people | 4 people | 2 people |
| Richness | 6 people | 2 people | 2 people |
| Milk feeling | 7 people | 3 people | 0 people |
| Tastiness | 6 people | 2 people | 2 people |

Meanwhile, it was surprisingly found from the results of Table 11 that, for each of the items "richness", "milk feeling", and "tastiness" except for "thickness", the biscuit using the powder, obtainable by the method of the present invention, was felt to be preferred to the biscuit using the whole milk powder.

**Table 11**

| Component | Biscuit 1 | No difference | Comparative biscuit 2 |
|---|---|---|---|
| Thickness | 3 people | 2 people | 5 people |
| Richness | 5 people | 2 people | 3 people |
| Milk feeling | 7 people | 2 people | 1 person |
| Tastiness | 6 people | 1 person | 3 people |

## Claims

1. A manufacturing method for a powder, comprising subjecting a raw material mixture containing a fat, a milk protein, a filler, and at least one selected from the group consisting of a monosaccharide and a disaccharide, wherein the weight ratio of the monosaccharides and disaccharides is 2% or less with respect to the total weight of the raw material mixture, to heat treatment, wherein a total amount of monosaccharides and disaccharides in the powder is reduced by heat treatment of the raw material mixture as compared to a total amount of the monosaccharides and the disaccharides in the raw material mixture before heating; wherein the filler comprises polydextrose, dextrin, or a mixture thereof, and the heat treatment is performed at a temperature of from 90°C to 120°C for 30 to 120 minutes.

2. The manufacturing method for the powder according to claim 1, wherein the fat comprises one member or two or more members selected from the group consisting of butter, butter oil, and a vegetable oil and fat.

3. The manufacturing method for the powder according to claim 1 or 2, wherein the milk protein comprises one member or two or more members selected from the group consisting of whole milk protein, milk protein isolate, whey protein, milk protein concentrate, casein, and casein salts.

4. The manufacturing method for the powder according to claim 1, wherein the filler comprises polydextrose.

5. The manufacturing method for the powder according to claim 1, wherein the heat treatment is performed at a temperature of from 115°C to 120°C.

## Patentansprüche

1. Herstellungsverfahren für ein Pulver, umfassend das Unterziehen einer Rohmaterialmischung, die ein Fett, ein Milchprotein, einen Füllstoff und wenigstens eines, ausgewählt aus der Gruppe, bestehend aus einem Monosaccharid und einem Disaccharid, enthält, wobei das Gewichtsverhältnis der Monosacchride und der Disaccharide 2% oder weniger bezogen auf das Gesamtgewicht der Rohmaterialmischung beträgt, einer Wärmebehandlung, wobei die Gesamtmenge an Monosacchariden und Disacchariden in dem Pulver durch die Wärmebehandlung der Rohmaterialmischung, im Vergleich zu der Gesamtmenge der Monosaccharide und Disaccharide in der Rohmaterialmischung vor dem Erwärmen, verringert wird, wobei der Füllstoff Polydextrose, Dextrin oder eine Mischung derselben umfasst, und die Wärmebehandlung bei einer Temperatur von 90°C bis 120°C für 30 bis 120 Minuten durchgeführt wird.

2. Herstellungsverfahren für ein Pulver nach Anspruch 1, wobei das Fett einen Bestandteil oder zwei oder mehr Bestandteile umfasst, ausgewählt aus der Gruppe, bestehend aus Butter, Butteröl und einem Pflanzenöl und Pflanzenfett.

3. Herstellungsverfahren für ein Pulver nach einem der Ansprüche 1 oder 2, wobei das Milchprotein einen Bestandteil oder zwei oder mehr Bestandteile umfasst, ausgewählt aus der Gruppe, bestehend aus Vollmilchprotein, Milchproteinisolat, Molkenprotein, Milchproteinkonzentrat, Casein und Caseinsalzen.

4. Herstellungsverfahren für ein Pulver nach Anspruch 1, wobei der Füllstoff Polydextrose umfasst.

5. Herstellungsverfahren für ein Pulver nach Anspruch 1, wobei die Wärmebehandlung bei einer Temperatur von 115°C bis 120°C durchgeführt wird.

## Revendications

1. Procédé de fabrication d'une poudre, comprenant la soumission d'un mélange de matières premières contenant une matière grasse, une protéine de lait, une charge, et au moins un élément sélectionné dans le groupe consistant en un monosaccharide et un disaccharide, dans lequel le rapport pondéral des monosaccharides et des disaccharides est de 2 % ou moins par rapport au poids total du mélange de matières premières, à un traitement thermique, dans lequel une quantité totale de monosaccharides et de disaccharides dans la poudre est réduite par le traitement thermique du mélange de matières premières par rapport à une quantité totale des monosaccharides et des disaccharides dans le mélange de matières premières avant chauffage ; dans lequel la charge comprend un polydextrose, une dextrine ou un mélange de ceux-ci, et le traitement thermique est effectué à une température de 90 °C à 120 °C pendant 30 à 120 minutes.

2. Procédé de fabrication de la poudre selon la revendication 1, dans lequel la matière grasse comprend un élément ou deux ou plus de deux éléments sélectionnés dans le groupe consistant en un beurre, une huile de beurre et une matière grasse et huile végétale.

3. Procédé de fabrication de la poudre selon la revendication 1 ou 2, dans lequel la protéine de lait comprend un élément ou deux ou plus de deux éléments sélectionnés dans le groupe consistant en une protéine de lait entier, un isolat de protéine de lait, une protéine de lactosérum, un concentré de protéine de lait, la caséine et les sels de caséine.

4. Procédé de fabrication de la poudre selon la revendication 1, dans lequel la charge comprend un polydextrose.

5. Procédé de fabrication de la poudre selon la revendication 1, dans lequel le traitement thermique est effectué à une température de 115 °C à 120 °C.
